Europäisches Patentamt

European Patent Office

Office européen des brevets

(11) Veröffentlichungsnummer: **0 394 766**
**A2**

(12) **EUROPÄISCHE PATENTANMELDUNG**

(21) Anmeldenummer: **90107002.9**

(22) Anmeldetag: **11.04.90**

(51) Int. Cl.5: **G01M 17/00**

(30) Priorität: **22.04.89 DE 3913345**

(43) Veröffentlichungstag der Anmeldung:
**31.10.90 Patentblatt 90/44**

(84) Benannte Vertragsstaaten:
**AT BE DE FR GB IT NL SE**

(71) Anmelder: **Asea Brown Boveri**
**Aktiengesellschaft**
**Kallstadter Strasse 1**
**D-6800 Mannheim 31(DE)**

(72) Erfinder: **Pana, Constantin**
**Am Brunnengarten 6**
**D-6800 Mannheim 1(DE)**
Erfinder: **Weyland, Hans-Walter**
**Neugasse 24**
**D-6701 Kallstadt(DE)**

(74) Vertreter: **Rupprecht, Klaus, Dipl.-Ing. et al**
**c/o Asea Brown Boveri Aktiengesellschaft**
**Zentralbereich Patente Postfach 100351**
**D-6800 Mannheim 1(DE)**

(54) **Prüfstand für Fahrzeuge.**

(57) Ein Fahrzeugprüfstand zum Testen von Fahrzeugen besteht aus einem Prüffeld (1) mit den Testgeräten und einem getrennt angeordneten Vorbereitungsfeld (2). Auf diesem Vorbereitungsfeld wird das zu testende Fahrzeug insoweit vorbereitet, daß es später nur noch mit einem Luftkissen-Transportsystem (4) in das Prüffeld (1) eingefahren werden braucht.

Fig. 1

## Prüfstand für Fahrzeuge

Die Erfindung bezieht sich auf einen Prüfstand für Fahrzeuge.

Ein Fahrzeugprüfstand dient als Ersatz für Teststrecken, da auf Teststrecken aufgrund von äußeren Einflüssen nicht die volle Fahrzeugleistung erbracht werden kann und spezielle Fahrsituationen nicht beliebig wiederholbar sind. Durch programmgesteuerte Prüfstände mit einer elektronischen Regelungs- und Simulationsanlage wird eine wirklichkeitsgetreue, dynamische Belastung nachgebildet, die praktisch allen Fahrbedingungen gerecht wird und mit der sich sämtliche Fahrsituationen exakt und jederzeit wiederholbar simulieren lassen. Da Teststrecken sehr kostspielig durch Geländeerwerb, Unterhalt und Umweltbelastung sind, haben sich Prüfstände immer mehr durchgesetzt.

Ein Prüfstand für Fahrzeuge besteht aus einem allseits geschlossenen Prüffeld, in das das Prüffahrzeug eingeschoben wird. Über Kardanwellen und Anpaßgetriebe werden die angetriebenen Radnaben des Prüffahrzeugs mit elektrischen Maschinen verbunden, die sowohl als Antrieb als auch bremsend wirken können. Mit diesen Maschinen können in der Praxis vorkommende Fahrsituationen simuliert werden. Die Anzahl der elektrischen Maschinen und damit die Anzahl der angetriebenen Radnaben oder Fahrzeugachsen ist beliebig und kann jederzeit erweitert werden. Die Anpaßgetriebe sind vorgesehen, um die Antriebs- und Bremsmomente zwischen Maschinen und Prüffahrzeug zu koordinieren, so daß auf einem Prüfstand sowohl Personenkraftwagen, Lastkraftwagen und schienengebundene Fahrzeuge als auch Panzer geprüft werden können.

Bevor mit dem eigentlichen Prüfvorgang begonnen werden kann, muß das Prüffahrzeug entsprechend vorbereitet werden. Dazu wird es mittels einer Hebebühne hochgehoben, so daß die Räder abmontiert werden können. Sodann wird das Prüffahrzeug derart maßgenau justiert, daß die Lage der Radnaben mit den Kardanwellen des Püfstandes übereinstimmen. Diese Höhen- und Seitenverstellung erfolgt über spezielle Einrichtungen. Zusätzlich wird der Einsatz von Adapterflanschen erforderlich. Weiterhin muß das Prüffahrzeug gefesselt werden, d.h., starr mit seiner Unterlage verbunden sein und mittels eines Transportsystems in das Prüffeld eingebracht werden.

Diese vorbereitenden Arbeiten dauern oft länger als der eigentliche Prüfvorgang. Das Kosten/Nutzen-Verhältnis bei den bekannten Fahrzeugprüfständen ist also schlecht.

Es ist deshalb Aufgabe der Erfindung, die teuren Prüfstandkosten durch Verringern der Vorbereitungszeit für das Prüffahrzeug zu senken.

Erfindungsgemäß wird dies durch die Merkmale des Patentanspruchs 1 erreicht. Ausgestaltungen sind aus den Unteransprüchen ersichtlich.

Vorteilhaft bei dem erfindungsgemäßen Prüfstand ist besonders der erhebliche Zeitgewinn bei dem gesamten Prüfvorgang. Während der Testvorgang des zu prüfenden Fahrzeuges noch auf dem Prüffeld läuft, kann der nächste Prüfling auf dem Vorbereitungsfeld bereits montiert werden. Nach Beendigung des Testvorganges wird das geprüfte Fahrzeug mittels Luftkissen aus dem Prüffeld gefahren und der neue Prüfling eingefahren. Test- und Vorbereitungsphase laufen also parallel, so daß sich erhebliche Einsparungen ergeben.

Der Einsatz eines Luftkissen-Transportsystems zum Einund Ausfahren des Prüffahrzeugs in die Prüffeldhalle bringt weiterhin den Vorteil, daß auch sehr große Fahrzeuge, beispielsweise Panzer mit einem Gewicht bis zu 60 t vergleichsweise einfach und leicht bewegbar sind und auch bei der Einjustierung im Prüffeld sehr schnell, genau und symmetrisch an die Kupplungen der Kardanwellen anpaßbar sind. Durch das Schweben des Prüffahrzeugs auf einem Luftpolster von nur wenigen Millimetern Höhe treten keine Reibungskräfte mehr auf, und Schiebe- und Drehbewegungen können auf einfache Art vorgenommen werden.

Mit dem erfindungsgemäßen Prüfstand lassen sich in vor teilhafter Weise ketten-, räder- und schienengebundene Fahrzeuge testen. Die Anzahl der Achsen der Prüffahrzeuge ist beliebig. Bei einfachen Prüfständen reicht eine Überprüfung von einer Antriebsachse aus. Prüffeld und Vorbereitungsfeld des Prüfstandes sind aber derart ausbaufähig, daß bis zu sechs angetriebene Achsen zum Einsatz kommen können. Im Prüffeld sind auch der Abstand der Achsen untereinander veränderbar, so daß jede Art von Fahrzeugen im Prüfstand untersucht werden kann.

Weitere Vorteile sind aus der nachfolgenden Beschreibung ersichtlich.

Ein Ausführungsbeispiel der Erfindung wird nachstehend anhand der schematischen Zeichnung naher erläutert.

Es zeigen:

Fig. 1 einen erfindungsgemäßen Prüfstand für Fahrzeuge in Draufsicht, bestehend aus einem Prüffeld und einem Vorbereitungsfeld mit einer Hebebühne und dem Luftkissen-Transportsystem,

Fig. 2a das Luftkissen-Transportsystem nach Fig. 1 in Seitenansicht mit seiner Montageplatte und seinem Betriebsteil und

Fig. 2b die Vorderansicht der einen Hälfte des Luftkissen-Transportsystems.

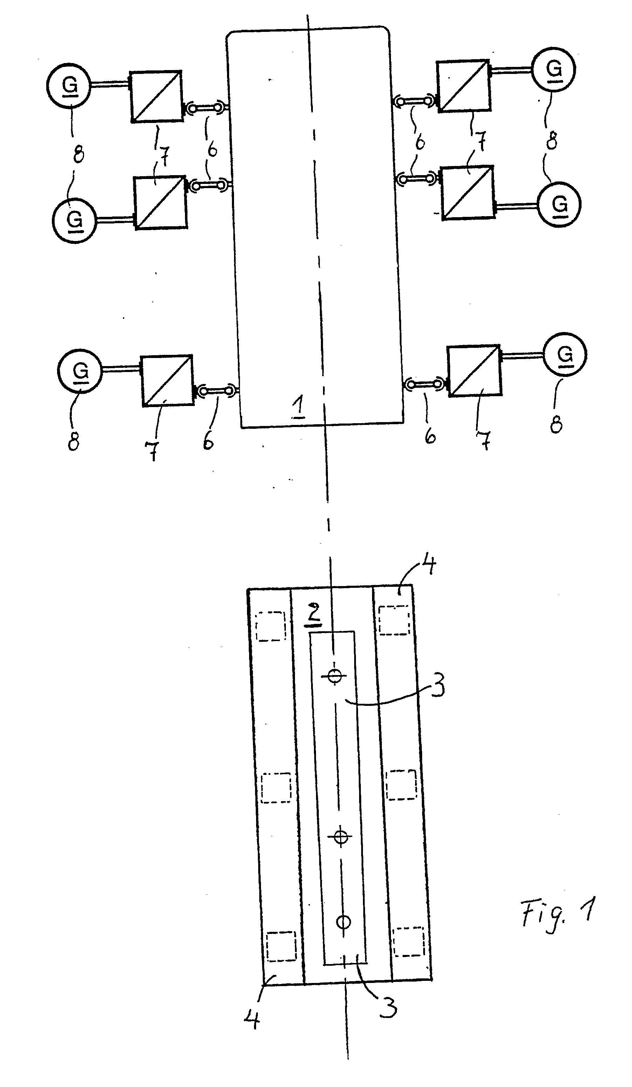

Nach Fig. 1 besteht ein Fahrzeugprüfstand aus einem Prüffeld 1 und einem Vorbereitungsfeld 2. Der Fahrzeugprüfstand ist in einer Halle mit festem Untergrund angeordnet. Auf dem Vorbereitungsfeld befindet sich eine Hebebühne 3 und ein Luftkissen-Transportsystem 4.

Das zu prüfende Fahrzeug wird im Vorbereitungsfeld 2 auf die spätere Prüfung in dem Prüffeld 1 vorbereitet und mit dem Luftkissen-Transportsystem 4 in das Prüffeld 1 gefahren. In dem Prüffeld 1 wird das nicht dargestellte Prüffahrzeug mit seinen Achsen an die Kardanwellen 6 angekuppelt. In der Fig. 1 wurde die Möglichkeit der Prüfung für ein dreiachsiges Fahrzeug dargestellt, dessen Achsen über die Kardanwellen 6, Ausgleichsgetriebe 7 an die elektrischen Maschinen 8 einer elektronischen Regelungs- und Simulationsanlage angelegt werden. Selbstverständlich lassen sich auch Fahrzeuge mit anderer Achszahl prüfen.

Das nicht dargestellte Prüffahrzeug fährt in der Regel mit eigenem Antrieb auf die Hebebühne 3 im Vorbereitungsfeld 2 und wird hier hydraulisch hochgehoben. Dann werden mit einer nicht gezeigten Räder-Demontage-Maschine die Räder gelockert und abgezogen. Jetzt wird das Luftkissen-Transportsystem 4 unter die gehobenen Prüffahrzeugradnaben geschoben, so daß die Hebebühne wieder eingefahren werden kann.

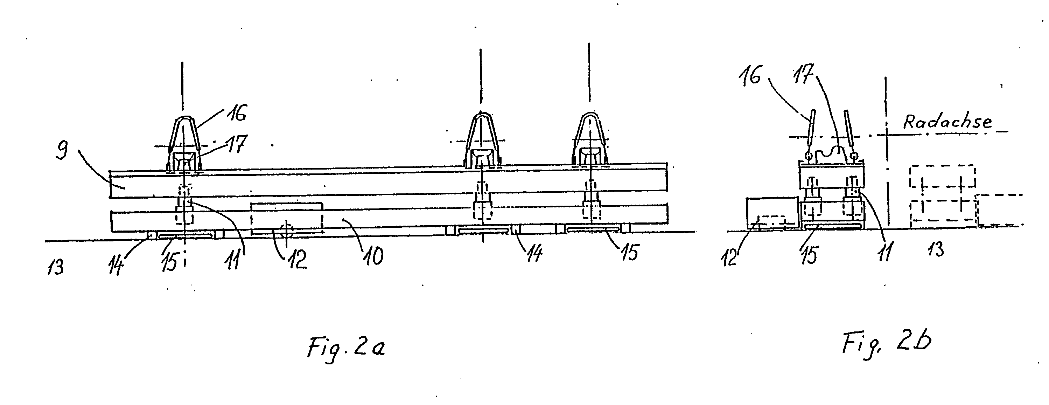

Gemäß Fig. 2a besteht das Luftkissen-Transportsystem 4 aus einer oberen Montageplatte 9 zur Aufnahme des Prüffahrzeugs und einem unteren Betriebsteil 10 mit dem eigentlichen Luftkissen-Transportsystem.

Die Montageplatte 9 ist über Hubzylinder 11 in der Höhe gegenüber dem unteren Betriebsteil 10 verstellbar. An dem unteren Betriebsteil 10 des Luftkissen-Transportsystems 4 ist ein druckluftangetriebenes Rollenantriebssystem angeordnet. Dieser Druckluftantrieb 12 dient zur Schiebe- und Drehbewegung des Luftkissen-Transportsystems 4. Dabei ist grundsätzlich für jedes Prüffahrzeug ein Paar von Druckluftantrieben 12 vorgesehen. Die Druckluftantriebe 12 sind vorwiegend an der Außenseite des Betriebsteils 10 angeordnet. In der Zeichnung wurde der Übersicht halber nur ein Luftantrieb gezeigt.

Für das eigentliche Einfahren des Prüffahrzeugs aus dem Vorbereitungsfeld 2 in das Prüffeld 1 ist also der Druckluftantrieb 12 vorgesehen, während das Hochheben der gesamten Anordnung durch unterhalb des Betriebsteils 10 vorhandene Luftpolster 15 in Verbindung mit Distanzstücken 14 erfolgt. Die Luftpolster 15 sind dabei vorwiegend unter jeder Achse des Prüffahrzeugs angeordnet.

Damit im Ruhezustand die Luftkissen 15 des Betriebsteils 10 nicht auf den Boden 13 gepreßt werden, sind unter dem Betriebsteil 10 die Distanzstücke 14 vorgesehen. Da derartige Luftkissensysteme allgemein bekannt sind, wurden in der Zeichnung auch nicht nähere Einzelheiten dargestellt.

Weiterhin sind auf der Montageplatte 9 des Luftkissen-Transportsystems Einspannblöcke 17 vorgesehen, auf denen die Achsen des Prüffahrzeugs angeordnet sind. Jede Achse des Prüffahrzeugs ist dabei auf zwei Einspannblöcken 17 gelagert. Mit Spanngurten 16, die sich oberhalb der Einspannblöcke 17 befinden, wird eine Fesselung und Positionierung des Radaufhängungen des Prüffahrzeugs vorgenommen.

In der Fig. 2b wurde der Übersicht halber nur die eine Hälfte des Luftkissentransportsystems in Vorderansicht dargestellt. Die andere Hälfte wurde nur angedeutet. Deutlich ist zu sehen, daß das Luftkissen-Transportsy stem aus zwei, jeweils identischen Hälften gebildet wird. Jede Hälfte besteht dabei jeweils aus Betriebsteil und Montageplatte mit den zugehörigen Einspannblöcken 17 und den Spanngurten 16. Jede Hälfte weist auch einen eigenen Druckluftantrieb 12 und Luftkissen 15 auf. In der Fig. 2b wurden auch die Radachse und die Fahrzeugmitte des Prüffahrzeugs angedeutet.

Beide Hälften werden miteinander durch das Prüffahrzeug verbunden, das auf den Einspannblöcken 17 befestigt wird. Das Luftkissen-Transportsystem mitsamt dem eingespannten Prüffahrzeug kann nun durch die Druckluftantriebe in das Prüffeld 1 eingebracht werden. Denkbar ist aber auch, daß das Luftkissen-Transportsystem aus einem Teil besteht, d.h., die beiden identischen Hälften sind starr miteinander verbunden.

Die Fesselung des Prüffahrzeugs erfolgt beispielsweise durch Spanngurte 16 oder Seile, die auf die Einspannblöcke 17 der Montageplatte 9 des Luftkissen-Transportsystems 4 befestigt sind und über die Radaufhängungen oder Achsen der abgenommenen Fahrzeugräder gezogen werden, so daß eine feste und richtige Position der Radnaben auf der Montageplatte 9 gewährleistet ist.

Über die hydraulischen Zylinder 11 zwischen der Montageplatte 9 und dem Betriebsteil 10 des Luftkissen-Transportsystems 4 läßt sich eine Anpassung an die zu erwartende Höhe der Kardanwelle 6 im Prüffeld 1 erreichen.

Der erfindungsgemäße Prüfstand wird also derart betrieben, daß auf dem separaten Vorbereitungsfeld 2 die Fahrzeugräder demontiert werden und das Prüffahrzeug fertig gemacht wird zum Ankuppeln an die Kardanwellen 6 des Prüffeldes 1. Wenn die richtigen Positionen der Prüffahrzeugradnaben auf dem Vorbereitungsfeld 2 erbracht sind, wird das Prüffahrzeug mittels des Luftkissen-Transportsystems 4 durch einfache Verschiebung in das Prüffeld 1 eingefahren und hier über nicht gezeigte Adapterflansche an die Kardanwellen 6 angekuppelt. Eine Prüfung des Fahrzeugs kann beginnen, während auf dem Vorbereitungsfeld 2 ein weiterer Prüfling für den nächsten Test vorbereitet wird.

**Ansprüche**

1. Prüfstand für Fahrzeuge, dadurch gekennzeichnet, daß der Prüfstand aufgeteilt ist in ein Prüffeld (1) zum Testen der Fahrzeuge und ein getrenntes Vorbereitungsfeld (2), wobei das Vorbereitungsfeld (2) aus einer Hebebühne (3) und einem Luftkissen-Transportsystem (4) besteht und das Luftkissen-Transportsystem (4) mit dem zum Testen vorbereiteten Prüffahrzeug mittels Luftantrieb in das Prüffeld (1) einfahrbar ist.

2. Prüfstand nach Anspruch 1 dadurch gekennzeichnet, daß das Luftkissen-Transportsystem (4) aus zwei identischen Hälften mit jeweils einem unteren, durch Luftkissen (15) hebbaren Betriebsteil (10) und einer oberen, über Hubzylinder (11) veränderbaren Montageplatte (9) zur Aufnahme des Prüffahrzeugs besteht.

3. Prüfstand nach Anspruch 1 oder 2, dadurch gekennzeichnet, daß der durch Luftkissen (15) hebbare, untere Betriebsteil (10) des Luftkissen-Transportsystems (4) für jede Seite des Prüffahrzeugs einen luftangetriebene Antrieb (12) aufweist.

4. Prüfstand nach Anspruch 1 oder 2, dadurch gekennzeichnet, daß die obere Montageplatte (9) des Luftkissen-Transportsystems (4) jeweils Einspannblöcke (17) entsprechend der Radnabenzahl des Prüffahrzeugs und ein Spann-Fesselungssystem (16) zur Positionierung der Prüffahrzeugradnaben aufweist.

5. Prüfstand nach einem der Ansprüche 1 bis 3, dadurch gekennzeichnet, daß sich der untere Betriebsteil (10) durch Distanzstücke (14) vom Erdboden (13) abstützt.

Fig. 1

Fig. 2a

Radachse

Fig. 2b

EP 0 394 766 A2